(19) Europäisches Patentamt
European Patent Office
Office européen des brevets

(11) **EP 4 350 927 A1**

(12) **EUROPEAN PATENT APPLICATION**
published in accordance with Art. 153(4) EPC

(43) Date of publication:
**10.04.2024 Bulletin 2024/15**

(21) Application number: **22831681.6**

(22) Date of filing: **14.06.2022**

(51) International Patent Classification (IPC):
**H02J 3/28** (2006.01)     **H02J 7/00** (2006.01)
**H02J 9/04** (2006.01)

(52) Cooperative Patent Classification (CPC):
**H02J 3/28; H02J 7/00; H02J 9/04; H02J 9/06;**
**H02J 13/00;** Y02B 70/30; Y04S 20/20

(86) International application number:
**PCT/CN2022/098530**

(87) International publication number:
**WO 2023/273861 (05.01.2023 Gazette 2023/01)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **30.06.2021 CN 202110742186**

(71) Applicant: **Huawei Technologies Co., Ltd.**
**Shenzhen, Guangdong 518129 (CN)**

(72) Inventors:
• **WAN, Yundong**
  **Shenzhen, Guangdong 518129 (CN)**
• **YAO, Guoqiang**
  **Shenzhen, Guangdong 518129 (CN)**
• **WANG, Hao**
  **Shenzhen, Guangdong 518129 (CN)**

(74) Representative: **Huawei European IPR**
**Huawei Technologies Duesseldorf GmbH**
**Riesstraße 25**
**80992 München (DE)**

(54) **POWER RESERVE METHOD AND RELATED DEVICE**

(57)    Embodiments of this application disclose a backup power supply method and a related device, to perform precise backup power supply control for services on different importance levels. The method in embodiments of this application includes: calculating a battery capacity of a battery based on historical power outage alarm information and historical power consumption information of a station in which the battery is located; if a power outage occurs in the station, calculating a state of charge of the battery based on actual power consumption and power outage duration of the station, and the battery capacity; and sending a current target energy saving level of the battery to the station if it is determined, based on the state of charge, that an energy saving level of the battery changes, so that the station uses a power saving policy corresponding to the target energy saving level, to reduce power consumption of the station.

**EP 4 350 927 A1**

201: Calculate a battery capacity of a battery based on historical power outage alarm information and historical power consumption information of the station

202: If a power outage occurs in the station, the battery starts to supply power to the station

203: Calculate a state of charge of the battery based on actual power consumption and power outage duration of the station, and the battery capacity

204: Send a current target energy saving level of the battery to the station if it is determined, based on the state of charge, that an energy saving level of the battery changes

FIG. 2

**Description**

This application claims priority to Chinese Patent Application No. CN202110742186.8, filed with the China National Intellectual Property Administration on June 30, 2021, and entitled "BACKUP POWER SUPPLY METHOD AND RELATED DEVICE", which is incorporated herein by reference in its entirety.

**TECHNICAL FIELD**

Embodiments of this application relate to the field of backup power supply, and in particular, to a backup power supply method and a related device.

**BACKGROUND**

In fields such as communication, data management, and the like, to prevent accidents such as data loss or service interruption caused by a power outage, a battery usually needs to be disposed in a power supply device of a station to back up power for the station. In some scenarios, backup power supply duration of a station is specified. When a power outage occurs, it needs to be ensured that duration in which the battery supplies power to the station is not shorter than the backup power supply duration. The backup power supply duration is related to power outage duration of the station. Generally, power outage time of the station is controlled within the backup power supply duration.

When a capacity of the station is expanded and device power consumption of the station increases, in a state of the power outage, an increase of station power consumption shortens the duration in which the battery supplies power to the station. As a result, the duration in which the battery supplies power to the station is shorter than the backup power supply duration. If electric power of the battery is exhausted before power supply is restored, a station outage occurs.

In a backup power supply method, in a process in which the power outage occurs in the station, the station is enabled to take a corresponding energy saving measure based on a state of charge of the battery. The station power consumption is reduced, so that the duration in which the battery supplies power to the station is prolonged. This reduces a probability of the station outage.

However, some types of batteries are passive devices, and states of charge of the batteries cannot be obtained. Therefore, the station power consumption cannot be reduced and power supply duration cannot be prolonged in a timely manner based on the state of charge, and the possibility of the occurrence of the station outage is high.

**SUMMARY**

Embodiments of this application provide a backup power supply method and a related device, to perform precise backup power supply control for services on different importance levels.

A first aspect of embodiments of this application provides a backup power supply method, where the method is applied to a control device, and the method includes:

A control device calculates a battery capacity of a battery based on historical power outage alarm information and historical power consumption information of a station in which the battery is located; if a power outage occurs in the station, in a process in which the battery supplies power to the station, the control device calculates a state of charge (state of charge, SOC) of the battery based on actual power consumption and power outage duration of the station, and the battery capacity; and the control device sends a current target energy saving level of the battery to the station if it is determined, based on the state of charge, that an energy saving level of the battery changes, so that the station uses a power saving policy corresponding to the target energy saving level, to reduce power consumption of the station.

In this embodiment of this application, the control device determines the battery capacity of the battery based on the historical power outage alarm information and the historical power consumption information of the station; and in a process in which the power outage occurs in the station and the battery supplies power to the station, the control device controls, based on an actual state of charge of the battery, a base station to reduce device power consumption. Some power consumption of the station is reduced in a timely manner based on an actual remaining power supply capacity (the actual state of charge) of the battery. This effectively prolongs backup power supply duration of the battery for the station. When a capacity of the station is expanded, the method is applied to reduce the power consumption of the station level by level based on the energy saving level of the battery under a same battery configuration condition. With the power consumption reduced, a requirement for the capacity of the battery is reduced. When the capacity of the station is expanded, the existing battery can meet a requirement for the backup power supply duration, and no battery needs to be additionally disposed to meet the backup power supply duration. This reduces backup power supply investment. Alternatively, if a battery needs to be additionally disposed, a capacity of the additionally disposed battery can be reduced because the requirement for the capacity of the battery is reduced. This reduces backup power investment.

In this embodiment of this application, the control device may determine, based on the historical power outage alarm information and the historical power consumption information, electric power consumed by the station when the power outage occurs in the station, to determine the electric power supplied by the battery to the station, and to determine the capacity of the battery.

In this embodiment of this application, in addition to determining the energy saving level of the battery based on the state of charge, the energy saving level of the battery may be further determined based on remaining backup power supply duration determined based on the state of charge, so that the target energy saving level is sent to the station. Specifically, in the method, the control device may calculate, based on the state of charge and current power consumption of the station, the remaining backup power supply duration in which the battery can supply power to the station. The control device sends the current target energy saving level of the battery to the station if it is determined, based on the remaining backup power supply duration, that the energy saving level of the battery changes, so that the station uses the power saving policy corresponding to the target energy saving level, to reduce the power consumption of the station.

In an optional implementation, the control device may further calculate the battery capacity of the battery based on historical station outage alarm information of the station. Specifically, in the method, the control device may calculate the battery capacity of the battery based on the historical power outage alarm information and the historical power consumption information, and the historical station outage alarm information of the station.

In this embodiment of this application, the historical station outage alarm information may indicate a case of one or more power outages caused when electric power of the battery is exhausted. For example, duration in which the battery supplies power to the station in a power outage process of the station may be determined based on the historical station outage alarm information, and then electric power consumed by the station is calculated based on current historical power consumption information. Because all the electric power is supplied by the battery, the capacity of the battery may be determined. Because power supply duration indicated by the historical station outage alarm information corresponds to information of duration in which the electric power of the battery is exhausted, the capacity of the battery can be accurately reflected. The battery capacity calculated based on the historical station outage alarm information is more accurate.

In an optional implementation, maximum power supply duration may be determined based on the historical power outage alarm information, so that the battery capacity of the battery is calculated. Specifically, in the method, the control device may determine, based on the historical power outage alarm information, the maximum power supply duration in which the battery supplies power to the station, and then calculate the battery capacity of the battery according to a capacity calculation formula. In the capacity calculation formula: the battery capacity is positively correlated with the maximum power supply duration, and is positively correlated with power consumption corresponding to the maximum power supply duration; or in the capacity calculation formula: the battery capacity is positively correlated with the maximum power supply duration, and is positively correlated with a current corresponding to the maximum power supply duration.

For a battery which cannot display an actual battery capacity, it is very difficult to obtain the state of charge SOC. Consequently, it is difficult to set different energy saving levels based on the state of charge SOC of the battery. In this embodiment of this application, the historical power outage alarm information and the historical power consumption information reflect historical information that the battery supplies power to the power station, and can accurately reflect an actual capacity of the battery. Therefore, the actual capacity of the battery calculated based on the historical power outage alarm information and historical power consumption information is accurate. Based on an accurate calculation result of the actual capacity of the battery, a suitable occasion may be determined to reduce the power consumption of the station and to effectively prolong the backup power supply duration of the battery for the station.

In an optional implementation, maximum power supply duration may be determined based on the historical station outage alarm information, so that the battery capacity of the battery is calculated. Specifically, in the method, the control device may determine, based on the historical power outage alarm information and the historical station outage alarm information, the maximum power supply duration in which the battery supplies power to the station, and then calculate the battery capacity of the battery according to a capacity calculation formula. In the capacity calculation formula: the battery capacity is positively correlated with the maximum power supply duration, and is positively correlated with power consumption corresponding to the maximum power supply duration; or in the capacity calculation formula: the battery capacity is positively correlated with the maximum power supply duration, and is positively correlated with a current corresponding to the maximum power supply duration.

In this embodiment of this application, the maximum power supply duration corresponding to electric power exhaustion of the battery may be learned of based on the historical power outage alarm information and the historical station outage alarm information. The maximum power supply duration corresponds to the electric power exhaustion of the battery, and reflects a storage capability of the battery, so that the battery capacity of the battery can be accurately reflected. The television capacity calculated based on the maximum power supply duration is more accurate.

In an optional implementation, a plurality of energy saving levels may be set: Different energy saving levels are set based on the state of charge SOC of the battery. For example, two energy saving levels may be set, and 50% of the state of charge is used as a boundary. When the state of charge is greater than 50%, the energy saving level is a high power consumption level. When the state of charge is less than 50%, the energy saving level is a low power consumption level. Optionally, a boundary condition of the energy saving level may be adjusted based on a requirement.

In an optional implementation, different power saving policies may be set for the station for the different energy saving levels, so that different power saving levels correspond to different power consumption levels. For example, if the state of charge corresponding to the energy saving level is smaller, a corresponding power saving policy corresponds to a lower power consumption level. For example, in a communication field, the different power saving policies may be separately set for 2G, 3G, 4G, and 5G devices, for example, power consumption non-reduction action, transmit power reduction, symbol power saving, carrier shutdown, and the like. Optionally, the set power saving policies may be adjusted for the different energy saving levels based on an actual requirement.

In this embodiment of this application, measures such as transmit power reduction, symbol power saving, carrier shutdown, and the like are used. This reduces battery energy consumption of a device in the station, enables the battery to supply longer backup power supply duration to the base station, and reduces a probability of a base station outage.

In an optional implementation, aging of the battery may be further considered, to calculate the state of charge of the battery. Specifically, in the method, the control device may calculate the battery capacity of the battery based on the historical power outage alarm information, the historical power consumption information, and an aging coefficient.

In this embodiment of this application, the battery capacity calculated based on the historical power outage alarm information and the historical power consumption information reflects the capacity of the station during the power outage. There may be a time interval between the power outage and calculation of the battery capacity. During the time interval, the battery may be prone to aging. Therefore, considering the aging during the time interval, the battery capacity at a current moment is calculated based on the aging coefficient. The calculation result is more accurate and can better reflect the actual capacity of the battery.

In an optional implementation, the battery may be a battery whose actual capacity cannot be displayed, for example, a lead-acid battery; or may be a battery whose actual capacity can be displayed, for example, a lithium battery.

In this embodiment of this application, regardless of whether the actual capacity of the battery can be displayed, the state of charge of the battery can be learned of (the state of charge which can be directly displayed is directly read, and the state of charge which cannot be displayed is calculated based on the foregoing method). Based on the state of charge of the battery, the station can be accurately controlled to use a corresponding energy saving policy and to adjust the actual power consumption of the station. When the capacity of the station is expanded and the power consumption level of the station is raised, a battery with a proper capacity can be added in the station based on the actual capacity of the existing battery. This avoids insufficient backup power supply duration caused by an excessively small capacity of the added battery, and avoids a waste of a battery resource and funds caused by an excessively large capacity of the added battery.

In an optional implementation, the station may be at least one of the following: a communication base station, a server, and an equipment room.

A second aspect of embodiments of this application provides a control device, where the control device includes a processor and a communication interface.

The processor is configured to: calculate a battery capacity of a battery based on historical power outage alarm information and historical power consumption information of a station in which the battery is located; and if a power outage occurs in the station, calculate a state of charge of the battery based on actual power consumption and power outage duration of the station, and the battery capacity.

The communication interface is configured to: send a current target energy saving level of the battery to the station if it is determined, based on the state of charge, that an energy saving level of the battery changes, so that the station uses a power saving policy corresponding to the target energy saving level, to reduce power consumption of the station.

The control device is configured to perform the backup power supply method according to the first aspect.

For beneficial effects of the second aspect, refer to the first aspect. Details are not described herein again.

A third aspect of embodiments of this application provides a backup power supply system, where the backup power supply system includes a station and a control device.

The station includes a power supply device, and the power supply device includes a battery.

The control device is on the battery, the power supply device, or the station.

The control device is configured to perform the backup power supply method according to the first aspect.

In an optional implementation, the station is at least one of the following: a communication base station, a server, and an equipment room.

A fourth aspect of embodiments of this application provides a backup power supply system, where the backup power supply system includes a station, a network management device, and a backhaul device.

The network management device includes a control device, and the control device is configured to perform the backup power supply method according to the first aspect.

In an optional implementation, the station is at least one of the following: a communication base station, a server, and an equipment room.

A fifth aspect of embodiments of this application provides a communication system, where the communication system includes a base station, a network management device, and a backhaul device. The network management device includes the control device according to the second aspect. The communication system is configured to implement the backup power supply method according to the first aspect.

A sixth aspect of embodiments of this application provides a computer-readable storage medium, where the computer-readable storage medium stores a program. When the program is executed by a computer, the method according to the first aspect is performed.

A seventh aspect of embodiments of this application provides a computer program product. When the computer program product is executed on a computer, the computer performs the method according to the first aspect.

BRIEF DESCRIPTION OF DRAWINGS

FIG. 1a is a schematic diagram of an application architecture of a backup power supply method according to an embodiment of this application;

FIG. 1b is a schematic diagram of another application architecture of a backup power supply method according to an embodiment of this application;

FIG. 2 is a schematic flowchart of a backup power supply method according to an embodiment of this application;

FIG. 3 is a schematic diagram of a remaining capacity of an aging battery;

FIG. 4 is a schematic diagram of a backup power supply method according to an embodiment of this application;

FIG. 5 is another schematic diagram of a backup power supply method according to an embodiment of this application;

FIG. 6A and FIG. 6B are a logical block diagram of a procedure of a backup power supply method according to an embodiment of this application;

FIG. 7 is a schematic diagram of a structure of a control device according to an embodiment of this application;

FIG. 8 is a schematic diagram of a structure of a backup power supply system according to an embodiment of this application; and

FIG. 9 is a schematic diagram of another structure of a backup power supply system according to an embodiment of this application.

DESCRIPTION OF EMBODIMENTS

The following describes embodiments of the present invention with reference to the accompanying drawings in embodiments of the present invention. Terms used in implementations of the present invention are merely intended to explain specific embodiments of the present invention, and are not intended to limit the present invention. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and the like are intended to distinguish similar objects but do not necessarily indicate a specific order or sequence. It should be understood that the terms used in such a way are interchangeable in proper circumstances, and this is merely a discrimination manner for describing objects having a same attribute in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

Embodiments of this application provide a backup power supply method and a related device, to implement precise backup power supply.

The following explains some professional terms in embodiments of this application.

Backup power supply: when a power outage occurs, a battery supplies power to a device.

Station: a set of devices configured to supply a service, for example, a base station, a server, an equipment room, and the like. For example, the base station, as a station, may include devices such as an integrated antenna feed, an antenna support structure, a power supply device and a power distribution device, an energy saving device and a temperature control device, and the like.

Station outage: the station does not operate due to various reasons, such as no power supply, a fault, or the like.

Capacity: an energy storage capacity that is of the battery and that is with a fixed value in a short period. That is, the capacity does not change in a process of supplying power to the station.

Electric power: an amount of energy stored by the battery. The electric power decreases in the process of supplying power to the station.

For ease of understanding, the following describes an application architecture of embodiments of this application.

I. An application architecture according to an embodiment of this application.

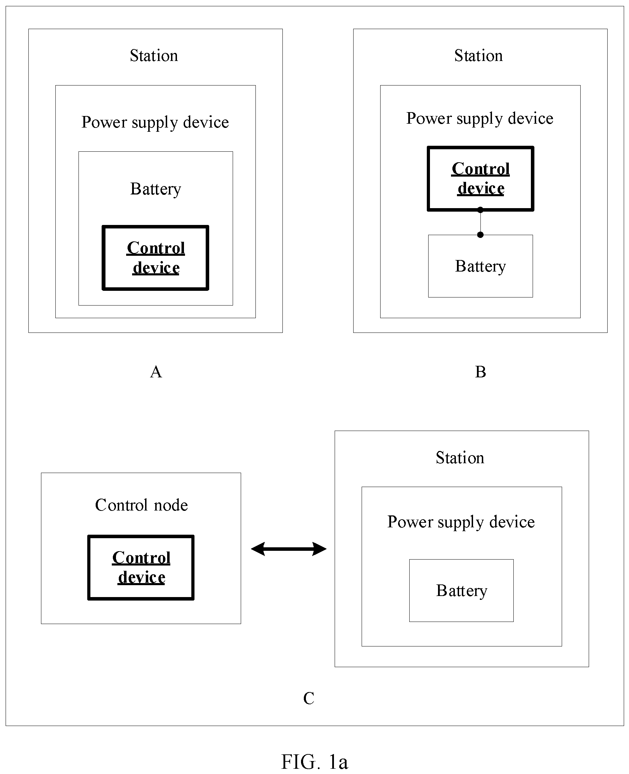

Refer to FIG. 1a. FIG. 1a is a schematic diagram of an application architecture of a backup power supply method according to an embodiment of this application. The architecture includes a station and a control device. The station includes a power supply device, and the power supply device is configured to supply power to the station. The power supply device includes a battery. If a power outage does not occur in the station, the power supply device supplies power to the station by using the mains. If the power outage occurs in the station, the power supply device supplies power to the station by using the battery.

The control device reduces the power consumption of the station based on a state of charge (state of charge, SOC) of the battery. This prolongs backup power supply duration of the battery. In this embodiment of this application, three types of application architectures shown in FIG. 1a may be determined based on a location of the control device.

Type 1: as shown in A, the control device is on the battery.

Type 2: as shown in B, the control device is on the power supply device.

Type 3: as shown in C, the control device is on a control node outside the station and can communicate with the power supply device on the station.

For example, the station may be a base station. In addition to the base station, the station may alternatively be another device set configured to supply a service, for example, a server, an equipment room, and the like. This is not limited herein.

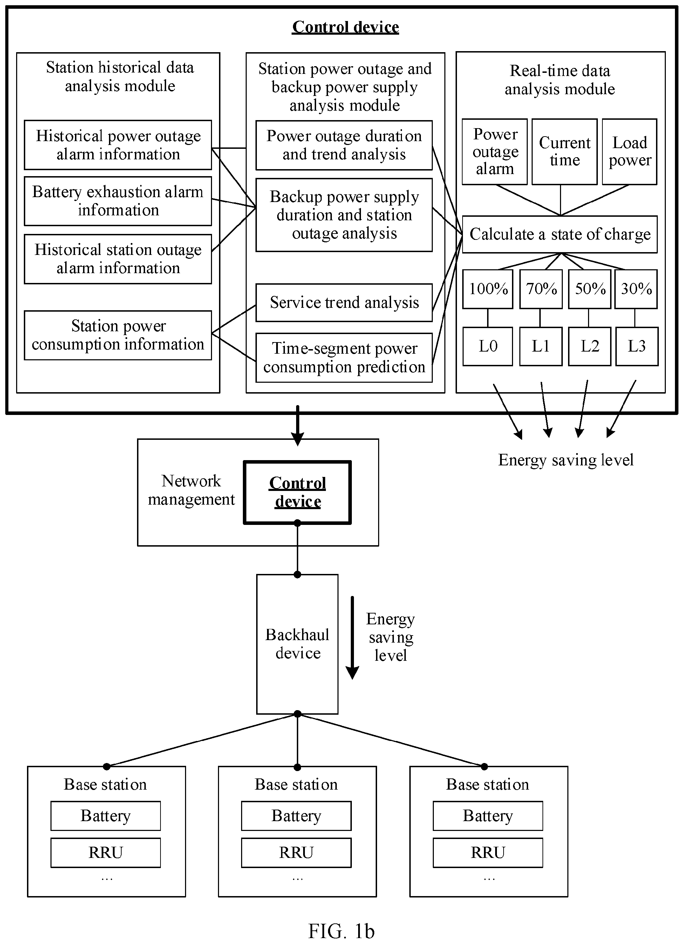

For example, in a communication base station, the architecture type in C of FIG. 1a may be expanded to the architecture shown in FIG. 1b. As shown in FIG. 1b, the control device is on network management as the control node, and communicates with the base station as the station through a backhaul device. It should be noted that the base station in FIG. 1b is merely an example of the station, and does not constitute a limitation on the station. The network management is merely an example of the control node. In addition to the network management, the control node may alternatively be a power supply management unit, a base band unit, or the like. This is not limited herein.

It should be noted that in embodiments of this application, the network management is also referred to as a network management device. This is not limited herein.

The base station includes the battery, and the battery is on the power supply device. In addition to the battery, the base station may further include another device, for example, a remote radio unit (remote radio unit, RRU) shown in FIG. 1b, an integrated antenna feed, a base band unit (base band unit, BBU), or the like. This is not limited herein.

As a part of the power supply device, the battery is configured to supply power to the base station when the power outage occurs in the base station. During the power outage in the base station, the base station may report power outage alarm information to the network management by using the backhaul device. In addition to the power outage alarm information, the base station may further report another type of information to the network management, for example, power consumption information and station outage information during the power outage.

For example, the control device on the network management may include a station historical data analysis module, a station power outage and backup power supply analysis module, and a real-time data analysis module.

The station historical data analysis module may collect and analyze historical power outage alarm information, battery exhaustion alarm information, historical station outage alarm information, and station power consumption information of the base station.

The station power outage and backup power supply analysis module may perform, based on an analysis result of the station historical data analysis module, power outage duration and trend analysis, backup power supply duration and station outage analysis, service trend analysis, time-segment power consumption prediction, and the like.

The real-time data analysis module may calculate the state of charge of the battery based on an analysis result of the station power outage and backup power supply analysis module. The state of charge may be calculated based on a power outage alarm, current time, a load power, and the like. After the real-time data analysis module calculates the state of charge, an energy saving level of the battery may be determined based on the state of charge.

After obtaining the energy saving level of the battery, the control device may transmit the energy saving level to a corresponding base station by using the backhaul device, so that the base station uses a power saving policy corresponding to the energy saving level, to reduce power consumption and to prolong duration in which the battery supplies power to the base station.

Optionally, the control device may alternatively determine the energy saving policy of the base station based on the energy saving level, and send the energy saving policy to the base station by using the backhaul device, so that the base station uses the energy saving policy to reduce the power consumption. This is not limited herein.

As shown in FIG. 1b, the control device is on the network management, and the control device may be on another control node, for example, on the BBU of the base station, or on the power supply device. This is not limited herein.

For example, the backhaul device shown in FIG. 1b may be a wireless backhaul device, for example, a microwave device and the like. In addition to the wireless backhaul device, the backhaul device may alternatively be a wired backhaul device, for example, an optical fiber and the like. This is not limited herein.

The foregoing describes application architectures according to the embodiment of this application, and the following describes a backup power supply method according to an embodiment of this application.

II. A backup power supply method according to an embodiment of this application.

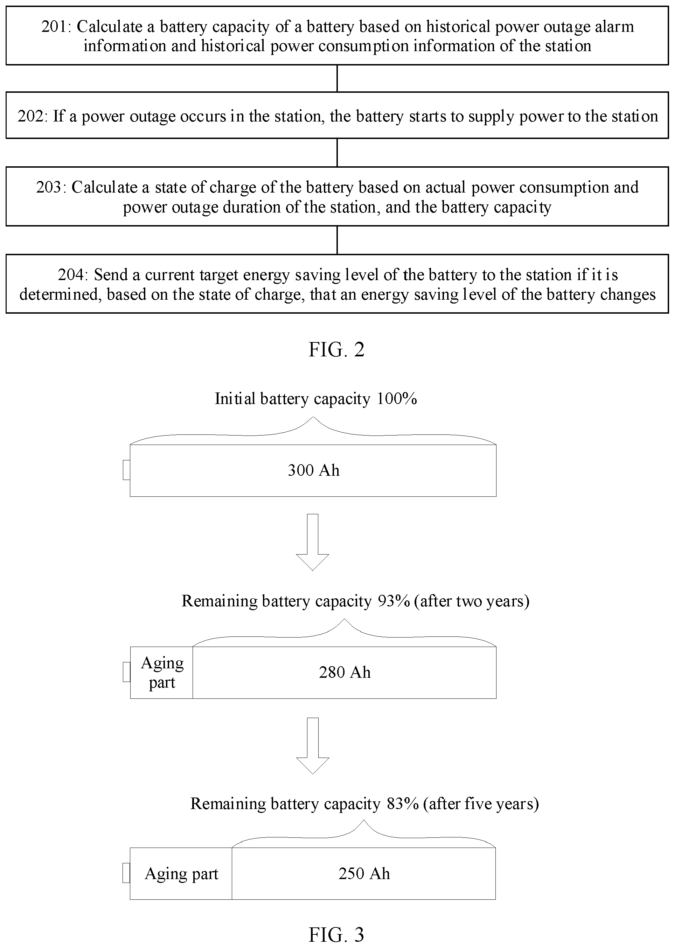

Refer to FIG. 2. In FIG. 2, a procedure of a backup power supply method according to an embodiment of this application is described by using an example in which a base station serves as a station. The method includes the following steps.

201: Calculate a battery capacity of a battery based on historical power outage alarm information and historical power consumption information of the station.

As the battery is used, the battery may be prone to aging, and the aging decreases an actual capacity (battery capacity) of the battery. As shown in FIG. 3, after the battery is used for two years, the battery capacity decreases to 93% of an original capacity; and after the battery is used for five years, the battery capacity decreases to 83% of the original capacity.

It should be noted that FIG. 3 is merely an example of description of a battery capacity decrease in a battery aging process, and does not constitute a limitation on an aging capacity of the battery. The capacity decrease of each battery varies in an aging process due to impact of battery charge and discharge, an ambient temperature, and the like.

Because the capacity decrease of each battery varies, in this application, energy consumed by the station in a historical process in which the battery supplies power to the station is calculated based on the historical power outage information and the historical power consumption information of the station in which the battery is located, to determine the battery capacity of the battery.

Specifically, the control device may obtain historical power outage alarm information and historical power consumption information of the base station, and calculate the battery capacity of the battery based on the historical power outage alarm information and the historical power consumption information.

Optionally, the control device may determine, based on the historical power outage alarm information, maximum power supply duration in which the battery supplies power to the base station. The maximum power supply duration is determined based on whether a station outage occurs in the base station. Capacity calculation formulas used to calculate the battery capacity of the battery also vary. The following separately describes the formulas.

1. The station outage occurs in the base station.

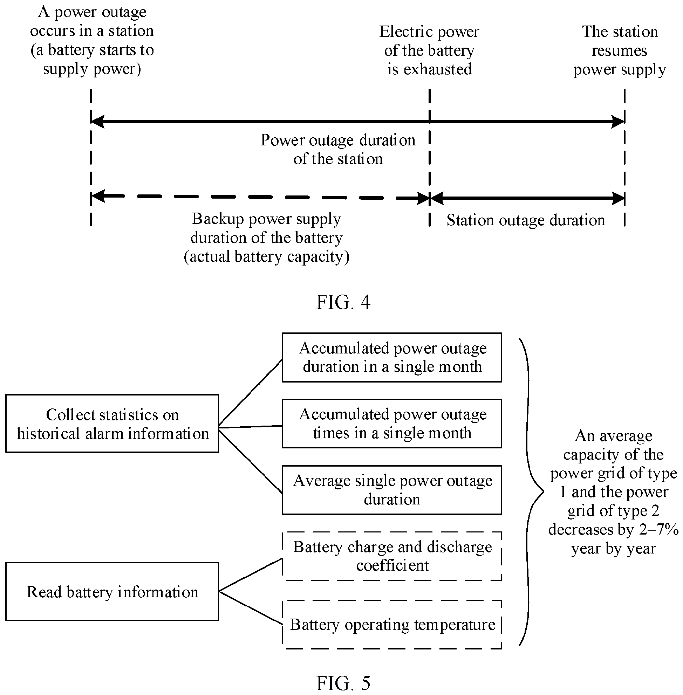

As shown in FIG. 4, if the station outage occurs in the base station, in addition to the historical power outage alarm information and the historical power consumption information, the control device may further obtain historical station outage alarm information of the base station. The control device may determine the maximum power supply duration based on the historical power outage alarm information and historical alarm information of the base station.

For example, the historical power outage alarm information may include power outage duration, and the historical station outage alarm information may include station outage duration. The historical power consumption information may include current load power consumption, that is, power consumption of the base station during a power outage. The control device may determine power outage duration and station outage duration that correspond to the power outage. The power outage duration minus the station outage duration is the duration in which the battery supplies power to the base station, that is, the maximum power supply duration described above. An actual battery capacity of the battery can be calculated based on the current load power consumption. A corresponding calculation formula is the following formula 1.

Formula 1:

$$\text{battery capacity} = (\text{maximum power outage duration} - \text{station outage duration}) \times \text{current load power}$$

For example, the historical power outage alarm information may include power outage start time, and the historical station outage alarm information may include station outage start time. The historical power consumption information may include the current load power consumption, that is, the power consumption of the base station during the power outage. The control device may determine, based on the power outage start time and the station outage start time, the duration in which the battery supplies power to the base station, that is, the maximum power supply duration described above. The actual battery capacity of the battery can be calculated based on the current load power consumption. A corresponding calculation formula is the following formula 2.

Formula 2:

$$\text{battery capacity} = (\text{station outage start time} - \text{power outage start time}) \times \text{current load power}$$

For example, the historical power outage alarm information may include the power outage start time, that is, a start moment $t_0$ of battery discharge, and the historical station outage alarm information may include the station outage start time, that is, an end moment $t_1$ of the battery discharge. The historical power consumption information may include a magnitude i(t) of a current discharged by the battery. A corresponding calculation formula is the following formula 3.

Formula 3:

$$\text{battery capacity} = \int_{t_0}^{t_1} i(t)dt$$

2. The station outage does not occur in the base station.

If the station outage does not occur in the base station, longest power outage duration may be determined in the historical power outage alarm information of the base station. If the power outage occurs in the base station, the battery is used to supply power to the base station, and the station outage does not occur in the base station. Therefore, the actual capacity of the battery should be greater than or equal to the energy consumption of the base station during the power outage. Therefore, the longest power outage duration can be used as the maximum power supply duration to calculate the capacity of the battery.

For example, the historical power outage alarm information may include the power outage duration, and the historical power consumption information may include the current load power consumption, that is, the power consumption of the base station during the power outage. The control device may determine the longest power outage duration, that is, the maximum power supply duration described above, and may calculate the actual battery capacity of the battery based on the current load power consumption. A corresponding calculation formula is the following formula 4.

Formula 4:

$$\text{battery capacity} = \text{maximum power outage duration} \times \text{current load power}$$

Optionally, the control device may obtain the historical power outage alarm information, the historical station outage alarm information, and the historical power consumption information of the base station by using the backhaul device or in another manner. For example, when the control device is on the base station, the control device may directly obtain the historical power outage information and the historical power consumption information of the base station from the base station. This is not limited herein.

It should be noted that, to ensure accuracy of a calculation result, statistics on the historical alarm information of the base station for more than one year needs to be collected to obtain sufficient power outage samples and to accurately reflect a state in which the battery supplies power to the station. This avoids that the accuracy of the calculation result is affected by an excessively small quantity of the samples.

In this embodiment of this application, the battery capacity calculated based on the historical power outage alarm information, the historical station outage alarm information (optional), and the historical power consumption information reflects a capacity of the station during the power outage. There may be a time interval between the power outage and calculation of the battery capacity. During the time interval, the battery may be prone to aging. Therefore, considering the aging during the time interval, the battery capacity at a current moment may be calculated based on an aging coefficient. The calculation result is more accurate and can better reflect the actual capacity of the battery.

Optionally, the aging coefficient may be determined based on power grid classification. Refer to FIG. 5. The control device may collect statistics on the historical alarm information of the base station, for example, accumulated power outage duration in a single month, accumulated power outage times in a single month, or average single power outage duration of the base station, or the like, to determine a type of a power grid to which the base station belongs, and may then determine an annual loss (that is, the aging coefficient) of the battery capacity based on the type of the power grid to which the base station belongs. Power grid classification principles are as follows.

Power grid of type 1: A monthly average power outage duration is shorter than 10 hours, and the annual loss of the battery capacity is 2%.

Power grid of type 2: A weekly average power outage duration is shorter than 10 hours, and the annual loss of the battery capacity is 7%.

Power grid of type 3: A daily average power outage duration is longer than or equal to 2 hours and shorter than 8 hours, and the annual loss of the battery capacity is 15%.

Power grid of type 4: The daily average power outage duration is longer than 8 hours or no power is supplied, the annual loss of the battery capacity is 20%.

Optionally, if the battery can display battery information such as a battery charge and discharge coefficient, a battery operating temperature, and the like, the battery information may further serve as an influencing factor to properly adjust an annual loss of the battery, to determine the actual battery capacity.

202: If the power outage occurs in the station, the battery starts to supply power to the station.

203: Calculate the state of charge of the battery based on the actual power consumption and the power outage duration of the station, and the battery capacity.

In a process in which the battery supplies power to the station, the state of charge of the battery continuously decreases. The state of charge of the battery may be calculated based on the actual power consumption and current power outage duration of the station, and the battery capacity of the battery.

Specifically, remaining backup power (the state of charge) may be calculated based on a backup power supply capacity (the battery capacity), and current power and the power outage duration of the base station. A calculation formula of the state of charge (state of charge, SOC) is shown in Formula 5.

Formula 5:

$$\text{SOC} = [1 - (\text{current time} - \text{power outage start time} \times \text{real-time power})/\text{actual battery capacity}] \times 100\%$$

Optionally, in this embodiment of this application, the remaining backup power supply duration in which the battery can supply power to the base station may be further calculated based on the state of charge calculated according to the foregoing formula. Specifically, the control device may calculate the remaining backup power supply duration based on the state of charge SOC and the current power consumption of the base station.

204: Send a current target energy saving level of the battery to the station if it is determined, based on the state of charge, that an energy saving level of the battery changes.

If the control device determines, based on the state of charge, that the energy saving level of the battery changes, the control device sends the current target energy saving level of the battery to the station, so that the station uses a power saving policy corresponding to the target energy saving level, to reduce power consumption of the station and to prolong power supply duration in which the battery supplies power to the station.

For example, refer to Table 1. Table 1 is an energy saving level setting table. In Table 1, a battery power supply process is classified into three levels based on the state of charge of the battery. 60% is set as a boundary between an energy saving level 1 and an energy saving level 2, and 40% is set as a boundary between an energy saving level 2 and an energy saving level 3.

**Table 1 Energy saving level setting table**

| Battery state | Energy saving level | Energy saving trigger | Energy saving exit |
|---|---|---|---|
| Discharge | Energy saving level 1 | 60% <= L1 < 100% | Mains recovery |
| | Energy saving level 2 | 40% <= L2 < 60% | Mains recovery |
| | Energy saving level 3 | 0% <= L3 < 40% | Mains recovery |
| Charge | Normal state | With normal mains, exit energy saving (regardless of the current state of charge of the battery), and report an energy saving level 0. | |

It should be noted that 60% is merely an example of the boundary between the energy saving level 1 and the energy saving level 2, and the boundary may alternatively be a value other than 60%, for example, 50%, 40%, or the like. This is not limited herein. 40% is merely an example of the boundary between the energy saving level 2 and the energy saving level 3, and the boundary may alternatively be a value other than 40%, for example, 30%, 20%, or the like. This is not limited herein.

At the energy saving level 1 (starting from the power outage in the base station), the base station may use an energy saving policy corresponding to the energy saving level 1 to reduce the energy consumption of the base station; at the energy saving level 2 (starting from 60%), the base station may use an energy saving policy corresponding to the energy saving level 2 to reduce the energy consumption of the base station; and at the energy saving level 3 (starting from 40%), the base station may use an energy saving policy corresponding to the energy saving level 3 to reduce the energy consumption of the base station, so that the base station is in a lowest energy consumption state for maintaining operation.

Based on the foregoing thresholds and the classification of the power saving levels for backup power supply, the base station may be in different energy consumption states at different power saving levels. Refer to Table 2. Table 2 is a schematic table of energy saving policies. Different energy saving policies may be used for different base stations (for example, a base station in a long term evolution (long term evolution, LTE) network or a (new radio, NR) base station).

**Table 2 Schematic table of energy saving policies**

| Power saving policy ID | Power saving policy | Energy saving level | LTE power saving measures | NR power saving measures |
|---|---|---|---|---|
| Power saving policy 1 | The cell shuts down a carrier immediately when the mains is unavailable. | Energy saving level 1 | Carrier shutdown | Carrier shutdown |
| | | Energy saving level 2 | Same as the energy saving level 1 | Same as the energy saving level 1 |
| | | Energy saving level 3 | Same as the energy saving level 1 | Same as the energy saving level 1 |
| Power saving policy 2 | Coverage of the cell is still maximally ensured when the mains is unavailable. | Energy saving level 1 | No action | Symbol power saving |
| | | Energy saving level 2 | Reduce transmit power of an available service | Same as the energy saving level 1 |
| | | Energy saving level 3 | Shut down a carrier | Same as the energy saving level 1 |
| Power saving policy 3 | The cell still provides a service after the mains is unavailable for a period of time, but shuts down the service of the cell when electric power of a battery is insufficient. | Energy saving level 1 | Reduce transmit power of an available service | Symbol power saving |
| | | Energy saving level 2 | Shut down a carrier | Carrier shutdown |
| | | Energy saving level 3 | Same as the energy saving level 2 | Same as the energy saving level 2 |

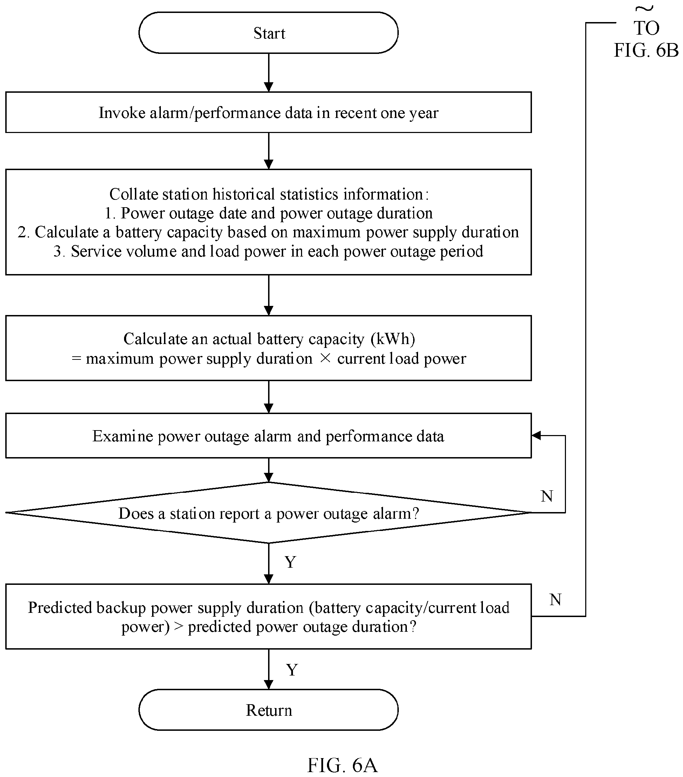

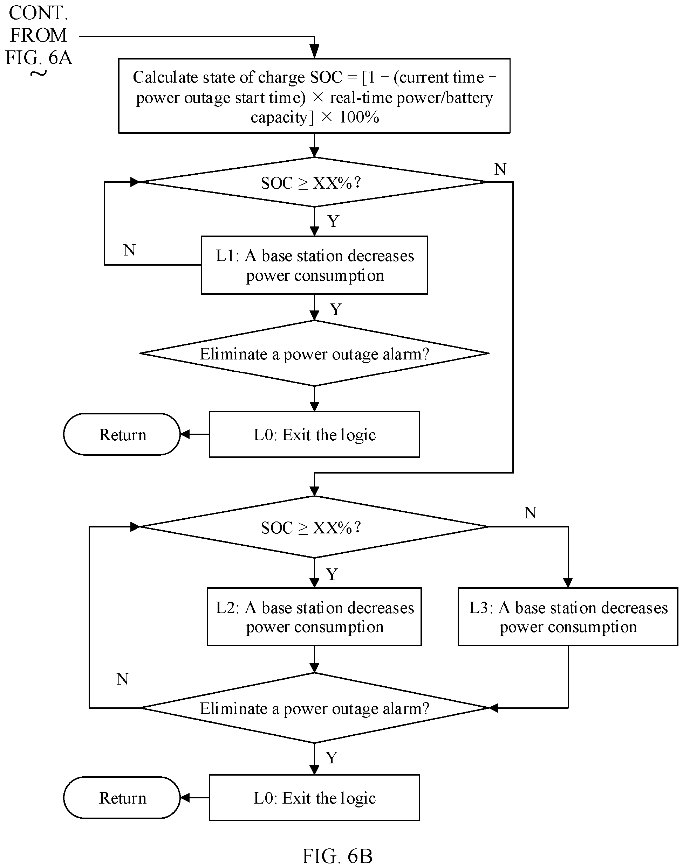

Refer to FIG. 6A and FIG. 6B. FIG. 6A and FIG. 6B are a logical block diagram of a procedure of the backup power supply method according to an embodiment of this application. In the figure, a state of charge SOC is determined twice on the right. XX% determined for the first time is the boundary between the energy saving level 1 and the energy saving level 2, and XX% determined for the second time is the boundary between the energy saving level 2 and the energy saving level 3. Details are described above and are not described herein again. L0 indicates that the base station resumes power supply, and the battery does not need to supply power to the base station. L1 indicates the power saving level 1, L2 indicates the power saving level 2, and L3 indicates the power saving level 3.

In this embodiment of this application, Table 1 and Table 2 are schematic tables of the energy saving levels and the energy saving policies, and do not constitute a limitation on a level classification threshold, an energy saving policy at a corresponding level, and the like. A boundary between the energy saving levels may be another value, and the energy saving policy may be another measure, or there may be more or fewer levels. This is not limited herein.

Optionally, in addition to determining the energy saving level of the battery based on the state of charge, the energy saving level of the battery may alternatively be determined based on the remaining backup power supply duration calculated based on the state of charge. In addition, the current target energy saving level may be sent to the base station when the energy saving level changes. Sending of the energy saving level is described above, and is not described herein again.

For a description of the remaining backup power supply duration, refer to the description in step 203. Classification between different energy saving levels is similar to the classification described in Table 1. Details are not described herein again.

The foregoing describes the backup power supply method according to an embodiment of this application. The following describes a device and a communication system according to embodiments of this application.

III. A device and a communication system provided in embodiments of this application.

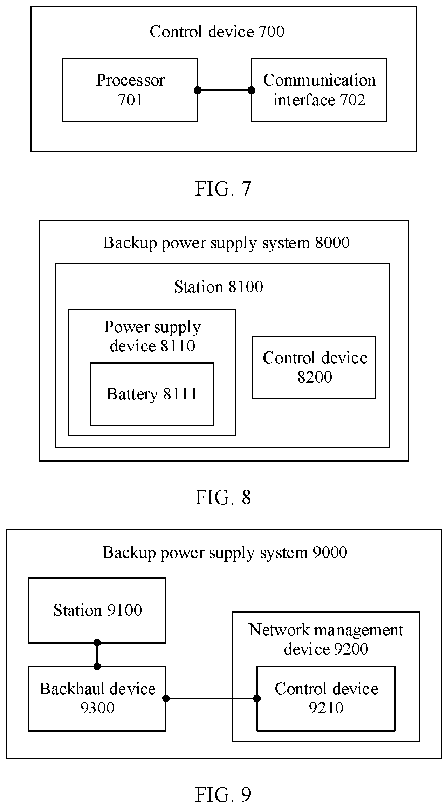

Refer to FIG. 7. FIG. 7 is a schematic diagram of a structure of a control device according to an embodiment of this application. As shown in FIG. 7, a control device 700 includes:
a processor 701 and a communication interface 702.

The processor 701 is configured to: calculate a battery capacity of a battery based on historical power outage alarm information and historical power consumption information of a station in which the battery is located; and if a power outage occurs in the station, calculate a state of charge of the battery based on actual power consumption and power outage duration of the station, and the battery capacity.

The communication interface 702 is configured to: send a current target energy saving level of the battery to the station if it is determined, based on the state of charge, that an energy saving level of the battery changes, so that the station uses a power saving policy corresponding to the target energy saving level, to reduce power consumption of the station.

In an optional implementation, the processor 701 is further configured to calculate, based on the state of charge and current power consumption of the station, remaining backup power supply duration in which the battery can supply power to the station.

The communication interface 702 is specifically configured to: send the current target energy saving level of the battery to the station if it is determined, based on the remaining backup power supply duration, that the energy saving level of the battery changes.

In an optional implementation, the processor 701 is specifically configured to: calculate the battery capacity of the battery based on the historical power outage alarm information, the historical power consumption information, and historical station outage alarm information of the station.

In an optional implementation, the processor 701 is specifically configured to: determine, based on the historical power outage alarm information, maximum power supply duration in which the battery supplies power to the station; and calculate the battery capacity according to a capacity calculation formula, where in the capacity calculation formula: the battery capacity is positively correlated with the maximum power supply duration, and is positively correlated with power consumption corresponding to the maximum power supply duration; or the battery capacity is positively correlated with the maximum power supply duration, and is positively correlated with a current corresponding to the maximum power supply duration.

In an optional implementation, the processor 701 is specifically configured to: determine, based on the historical power outage alarm information and the historical station outage alarm information, maximum power supply duration in which the battery supplies power to the station; and calculate the battery capacity according to a capacity calculation formula, where in the capacity calculation formula: the battery capacity is positively correlated with the maximum power supply duration, and is positively correlated with power consumption corresponding to the maximum power supply duration; or the battery capacity is positively correlated with the maximum power supply duration, and is positively correlated with a current corresponding to the maximum power supply duration.

In an optional implementation, the processor 701 is specifically configured to calculate the battery capacity of the battery based on the historical power outage alarm information, the historical power consumption information, and an aging coefficient.

In an optional implementation, the battery includes a lead-acid battery and/or a lithium battery.

In an optional implementation, the station is at least one of the following: a communication base station, a server, and an equipment room.

Refer to FIG. 8. FIG. 8 is a schematic diagram of a structure of a backup power supply system according to an embodiment of this application. As shown in FIG. 8, a backup power supply system 8000 includes:
a station 8100 and a control device 8200.

The station 8100 includes a power supply device 8110, and the power supply device 8110 includes a battery 8111.

As shown in FIG. 8, the control device 8200 may be on the station 8100.

Optionally, the control device may alternatively be on the power supply device 8110 or the battery 8111. This is not limited herein.

The control device 8200 is configured to perform the backup power supply method shown in FIG. 2 to FIG. 6B.

Refer to FIG. 9. FIG. 9 is a schematic diagram of a structure of a backup power supply system according to an embodiment of this application. As shown in FIG. 9, a backup power supply system 9000 includes:
a station 9100, a network management device 9200, and a backhaul device 9300.

The network management device 9200 includes a control device 9210, and the control device 9210 is configured to perform the backup power supply method shown in FIG. 2 to FIG. 6B.

An embodiment of this application further provides a computer-readable storage medium. The computer-readable storage medium stores a program. When the program is executed by a computer, the method in FIG. 2 to FIG. 6B is performed.

An embodiment of this application further provides a computer program product. When the computer program product is executed on a computer, the computer performs the method in FIG. 2 to FIG. 6B.

It may be clearly understood by a person skilled in the art that, for the purpose of convenient and brief description, for a detailed working process of the foregoing systems, apparatuses, and units, reference may be made to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, the division of units is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or a part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The storage medium includes any medium that can store program code, for example, a USB flash drive, a removable hard disk, a read-only memory (read-only memory, ROM), a random access memory (random access memory, RAM), a magnetic disk, an optical disc, or the like.

## Claims

1. A backup power supply method, wherein the method is applied to a control device, and the method comprises:

   calculating a battery capacity of a battery based on historical power outage alarm information and historical power consumption information of a station in which the battery is located;
   if a power outage occurs in the station, calculating a state of charge of the battery based on actual power

EP 4 350 927 A1

consumption and power outage duration of the station, and the battery capacity; and

sending a current target energy saving level of the battery to the station if it is determined, based on the state of charge, that an energy saving level of the battery changes, so that the station uses a power saving policy corresponding to the target energy saving level, to reduce power consumption of the station.

2. The method according to claim 1, wherein the sending a current target energy saving level of the battery to the station if it is determined, based on the state of charge, that an energy saving level of the battery changes comprises:

calculating, based on the state of charge and current power consumption of the station, remaining backup power supply duration in which the battery can supply power to the station; and

sending the current target energy saving level of the battery to the station if it is determined, based on the remaining backup power supply duration, that the energy saving level of the battery changes.

3. The method according to claim 1 or 2, wherein the calculating a battery capacity of a battery based on historical power outage alarm information and historical power consumption information of a station in which the battery is located comprises:

calculating the battery capacity of the battery based on the historical power outage alarm information, the historical power consumption information, and historical station outage alarm information of the station.

4. The method according to any one of claims 1 to 3, wherein the calculating a battery capacity of a battery based on historical power outage alarm information and historical power consumption information of a station in which the battery is located comprises:

determining, based on the historical power outage alarm information, maximum power supply duration in which the battery supplies power to the station; and

calculating the battery capacity according to a capacity calculation formula, wherein in the capacity calculation formula:

the battery capacity is positively correlated with the maximum power supply duration, and is positively correlated with power consumption corresponding to the maximum power supply duration; or

the battery capacity is positively correlated with the maximum power supply duration.

5. The method according to claim 3, wherein the calculating the battery capacity of the battery based on the historical power outage alarm information, the historical power consumption information, and historical station outage alarm information of the station comprises:

determining, based on the historical power outage alarm information and the historical station outage alarm information, maximum power supply duration in which the battery supplies power to the station; and

calculating the battery capacity according to a capacity calculation formula, wherein in the capacity calculation formula:

the battery capacity is positively correlated with the maximum power supply duration, and is positively correlated with power consumption corresponding to the maximum power supply duration; or

the battery capacity is positively correlated with the maximum power supply duration.

6. The method according to any one of claims 1 to 5, wherein the calculating a battery capacity of a battery based on historical power outage alarm information and historical power consumption information of a station in which the battery is located comprises:

calculating the battery capacity of the battery based on the historical power outage alarm information, the historical power consumption information, and an aging coefficient.

7. The method according to any one of claims 1 to 6, wherein the battery comprises:

a lead-acid battery and/or a lithium battery.

8. The method according to any one of claims 1 to 7, wherein the station is at least one of the following: a communication base station, a server, and an equipment room.

9. A control device, wherein the control device comprises a processor and a communication interface;

the processor is configured to:

calculate a battery capacity of a battery based on historical power outage alarm information and historical power consumption information of a station in which the battery is located; and

if a power outage occurs in the station, calculate a state of charge of the battery based on actual power consumption and power outage duration of the station, and the battery capacity; and

the communication interface is configured to:

send a current target energy saving level of the battery to the station if it is determined, based on the state of charge, that an energy saving level of the battery changes, so that the station uses a power saving policy corresponding to the target energy saving level, to reduce power consumption of the station.

10. The control device according to claim 9, wherein the processor is further configured to calculate, based on the state of charge and current power consumption of the station, remaining backup power supply duration in which the battery can supply power to the station; and

the communication interface is specifically configured to: send the current target energy saving level of the battery to the station if it is determined, based on the remaining backup power supply duration, that the energy saving level of the battery changes.

11. The control device according to claim 9 or 10, wherein the processor is specifically configured to:

calculate the battery capacity of the battery based on the historical power outage alarm information, the historical power consumption information, and historical station outage alarm information of the station.

12. The control device according to any one of claims 9 to 11, wherein the processor is specifically configured to:

determine, based on the historical power outage alarm information, maximum power supply duration in which the battery supplies power to the station; and

calculate the battery capacity according to a capacity calculation formula, wherein in the capacity calculation formula:

the battery capacity is positively correlated with the maximum power supply duration, and is positively correlated with power consumption corresponding to the maximum power supply duration; or

the battery capacity is positively correlated with the maximum power supply duration.

13. The control device according to claim 11, wherein the processor is specifically configured to:

determine, based on the historical power outage alarm information and the historical station outage alarm information, maximum power supply duration in which the battery supplies power to the station; and

calculate the battery capacity according to a capacity calculation formula, wherein in the capacity calculation formula:

the battery capacity is positively correlated with the maximum power supply duration, and is positively correlated with power consumption corresponding to the maximum power supply duration; or

the battery capacity is positively correlated with the maximum power supply duration.

14. The control device according to any one of claims 9 to 13, wherein the processor is specifically configured to:

calculate the battery capacity of the battery based on the historical power outage alarm information, the historical power consumption information, and an aging coefficient.

15. The control device according to any one of claims 9 to 14, wherein the battery comprises:

a lead-acid battery and/or a lithium battery.

16. The control device according to any one of claims 9 to 15, wherein the station is at least one of the following: a communication base station, a server, and an equipment room.

17. A backup power supply system, wherein the backup power supply system comprises a station and a control device;

the station comprises a power supply device, and the power supply device comprises a battery;

the control device is on the battery, the power supply device, or the station; and

the control device is configured to perform the method according to any one of claims 1 to 8.

18. A backup power supply system, wherein the backup power supply system comprises a station, a network management device, and a backhaul device; and
the network management device comprises a control device, and the control device is configured to perform the method according to any one of claims 1 to 8.

19. A computer-readable storage medium, wherein the computer-readable storage medium stores a program, and when the program is executed by a computer, the method according to any one of claims 1 to 8 is performed.

20. A computer program product, wherein when the computer program product is executed on a computer, the computer performs the method according to any one of claims 1 to 8.

FIG. 1a

FIG. 1b

201: Calculate a battery capacity of a battery based on historical power outage alarm information and historical power consumption information of the station

202: If a power outage occurs in the station, the battery starts to supply power to the station

203: Calculate a state of charge of the battery based on actual power consumption and power outage duration of the station, and the battery capacity

204: Send a current target energy saving level of the battery to the station if it is determined, based on the state of charge, that an energy saving level of the battery changes

FIG. 2

Initial battery capacity 100%

300 Ah

Remaining battery capacity 93% (after two years)

Aging part | 280 Ah

Remaining battery capacity 83% (after five years)

Aging part | 250 Ah

FIG. 3

A power outage
occurs in a station
(a battery starts to
supply power)

Electric power
of the battery
is exhausted

The station
resumes
power supply

Power outage duration
of the station

Backup power supply
duration of the battery
(actual battery capacity)

Station outage duration

FIG. 4

Collect statistics on
historical alarm information

Accumulated power outage
duration in a single month

Accumulated power outage
times in a single month

Average single power outage
duration

Read battery information

Battery charge and discharge
coefficient

Battery operating temperature

An average
capacity of the
power grid of type
1 and the power
grid of type 2
decreases by 2–7%
year by year

FIG. 5

```
                          ┌─────────────────────┐                              ~
                          │        Start        │                         ┌─── TO
                          └─────────────────────┘                         │  FIG. 6B
                                    │
                                    ▼
         ┌──────────────────────────────────────────────────────┐
         │     Invoke alarm/performance data in recent one year    │
         └──────────────────────────────────────────────────────┘
                                    │
                                    ▼
         ┌──────────────────────────────────────────────────────┐
         │        Collate station historical statistics information:        │
         │        1. Power outage date and power outage duration        │
         │  2. Calculate a battery capacity based on maximum power supply duration │
         │    3. Service volume and load power in each power outage period     │
         └──────────────────────────────────────────────────────┘
                                    │
                                    ▼
         ┌──────────────────────────────────────────────────────┐
         │         Calculate an actual battery capacity (kWh)       │
         │   = maximum power supply duration × current load power    │
         └──────────────────────────────────────────────────────┘
                                    │
                                    ▼
         ┌──────────────────────────────────────────────────────┐
         │      Examine power outage alarm and performance data     │◄─────┐
         └──────────────────────────────────────────────────────┘      │
                                    │                                    │
                                    ▼                                    │ N
                      ◇─────────────────────────◇                        │
                      Does a station report a power outage alarm?─────────┘
                      ◇─────────────────────────◇
                                    │ Y
                                    ▼
         ┌──────────────────────────────────────────────────────┐   N
         │ Predicted backup power supply duration (battery capacity/current load │───┐
         │       power) > predicted power outage duration?           │
         └──────────────────────────────────────────────────────┘
                                    │ Y
                                    ▼
                          ┌─────────────────────┐
                          │       Return        │
                          └─────────────────────┘
```

FIG. 6A

CONT.
FROM
FIG. 6A
~

Calculate state of charge SOC = [1 − (current time − power outage start time) × real-time power/battery capacity] × 100%

SOC ≥ XX%? — N

Y

L1: A base station decreases power consumption

N

Y

Eliminate a power outage alarm?

L0: Exit the logic — Return

SOC ≥ XX%? — N

Y

L2: A base station decreases power consumption

L3: A base station decreases power consumption

N

Eliminate a power outage alarm?

Y

L0: Exit the logic — Return

FIG. 6B

Control device 700

Processor 701 — Communication interface 702

FIG. 7

Backup power supply system 8000

Station 8100

Power supply device 8110

Battery 8111

Control device 8200

FIG. 8

Backup power supply system 9000

Station 9100

Network management device 9200

Backhaul device 9300

Control device 9210

FIG. 9

## INTERNATIONAL SEARCH REPORT

| | International application No. |
|---|---|
| | **PCT/CN2022/098530** |

**A. CLASSIFICATION OF SUBJECT MATTER**

H02J 3/28(2006.01)i; H02J 7/00(2006.01)i; H02J 9/04(2006.01)i

According to International Patent Classification (IPC) or to both national classification and IPC

**B. FIELDS SEARCHED**

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

CNTXT; ENTXTC; ENTXT; DWPI; CNKI; IEEE: 备电, 备用电源, 降低, 功耗, 计算, 电池, 容量, 剩余电量, SOC, 停电, 时长, 节能等级, reduc?, lower?, power consumption, energy consumption, state of charge

**C. DOCUMENTS CONSIDERED TO BE RELEVANT**

| Category* | Citation of document, with indication, where appropriate, of the relevant passages | Relevant to claim No. |
|---|---|---|
| A | CN 112421701 A (SHANGHAI HUAWEI TECHNOLOGIES CO., LTD.) 26 February 2021 (2021-02-26)<br>    description, paragraphs 56-201, and figures 1-9 | 1-20 |
| A | CN 104244300 A (CHINA MOBILE GROUP ZHEJIANG CO., LTD. et al.) 24 December 2014 (2014-12-24)<br>    entire document | 1-20 |
| A | CN 110572868 A (UNISOC (CHONGQING) TECHNOLOGY CO., LTD.) 13 December 2019 (2019-12-13)<br>    entire document | 1-20 |
| A | US 2019193574 A1 (LOON LLC.) 27 June 2019 (2019-06-27)<br>    entire document | 1-20 |
| A | JP 2017041933 A (NTT DOCOMO INC.) 23 February 2017 (2017-02-23)<br>    entire document | 1-20 |
| A | 刘熙等 (LIU, Xi et al.). "5G基站电源技术的应用研究 (Research on the Application of 5G Base Station Power Technology)"<br>电信快报 *(Telecommunications Information)*, No. 03, 10 March 2020 (2020-03-10), pp. 31-33 | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 August 2022** | **31 August 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2022/098530** |

| Patent document cited in search report | | | Publication date (day/month/year) | Patent family member(s) | | | Publication date (day/month/year) |
| --- | --- | --- | --- | --- | --- | --- | --- |
| CN | 112421701 | A | 26 February 2021 | WO | 2021031742 | A1 | 25 February 2021 |
| CN | 104244300 | A | 24 December 2014 | CN | 104244300 | B | 15 May 2018 |
| CN | 110572868 | A | 13 December 2019 | | None | | |
| US | 2019193574 | A1 | 27 June 2019 | US | 2020009985 | A1 | 09 January 2020 |
| | | | | US | 2021001748 | A1 | 07 January 2021 |
| | | | | US | 10464443 | B2 | 05 November 2019 |
| JP | 2017041933 | A | 23 February 2017 | JP | 6532349 | B2 | 19 June 2019 |

Form PCT/ISA/210 (patent family annex) (January 2015)

**EP 4 350 927 A1**

**Patent documents cited in the description**

- CN 202110742186